Europäisches Patentamt

European Patent Office

Office européen des brevets

(11) Numéro de publication: **0 123 648**
**A1**

## (12) DEMANDE DE BREVET EUROPEEN

(21) Numéro de dépôt: **84810129.1**

(22) Date de dépôt: **20.03.84**

(51) Int. Cl.³: **G 01 S 15/74**
**B 63 G 8/42**

(30) Priorité: **25.03.83 CH 1650/83**

(43) Date de publication de la demande:
**31.10.84 Bulletin 84/44**

(84) Etats contractants désignés:
**DE FR GB IT NL SE**

(71) Demandeur: **Eberlin, Philippe**
**16, chemin Thury**
**CH-1206 Genève(CH)**

(72) Inventeur: **Eberlin, Philippe**
**16, chemin Thury**
**CH-1206 Genève(CH)**

(74) Mandataire: **Mohnhaupt, Dietrich et al,**
**DIETLIN, MOHNHAUPT & CIE 3, quai du Mont-Blanc**
**CH-1201 Genève(CH)**

(54) **Dispositif électroacoustique d'identification subaquatique d'un objet immergé ou flottant, notamment d'un navire.**

(57) Le dispositif comprend quatre transducteurs électroacoustiques (17, 18, 19, 20) commandés par un circuit (29) agencé pour émettre un signal codé d'identification à une fréquence située entre 3 et 12 kHz selon un programme établi, les transducteurs (17-20) et le circuit (29) étant logés dans une traîne étanche (4) reliée à l'objet immergé ou flottant par l'intermédiaire d'un câble électro-mécanique (5), la traîne présentant des moyens (25, 26) pour être immergée à une profondeur prédéterminée.

FIG. 3

EP 0 123 648 A1

Dispositif électroacoustique d'identification subaquatique d'un objet immergé ou flottant, notamment d'un navire

L'invention a pour objet un dispositif électroacoustique d'identification subaquatique d'un objet immergé ou flottant, notamment d'un navire, comprenant au moins un transducteur électroacoustique commandé par un circuit agencé pour émettre un signal codé d'identification à une fréquence située entre 2 et 12 kHz selon un proframme établi.

L'identification de navires hopitaux et celles d'embarcations protégées par les conventions de Genève du 12 août 1949, ainsi que de navires devant être identifiés par des sous-marins, notamment les navires des Etats neutres, a été expérimentée récemment dans les eaux du Lac Léman et en mer. Cette identification acoustique subaquatique est émise par un système d'émission donnant en morse l'indicatif radio d'un navire sur une fréquence sonore en rapport avec la fréquence du bruit du navire. Le signal d'identification est ainsi très proche du bruit du navire et suit ainsi avec ce bruit la même propagation subaquatique, de sorte qu'il pourra être détecté en même temps que le bruit du navire par le système d'écoute d'un sous-marin immergé. Après les premiers essais, des dispositifs électroacoustiques d'identification subaquatique ont été réalisés et montés à bord de trois navires battant pavillon suisse, c'est-à-dire le Regina, le Rhône et le Cervin. Ces trois prototypes permettent d'émettre à l'aide de transducteurs et en code morse l'indicatif d'appel du navire sur des fréquences qui ont été choisies entre 5 et 5,1 kHz. Ces dispositifs d'identification sont décrits dans le brevet suisse No. ........ (demande de brevet No. 7424/79-0). Il est dit dans le brevet suisse mentionné ci-dessus que le code d'identification du signal d'émission est composé d'un signal de début de transmission suivi de l'indicatif d'appel du navire éventuellement répété une seconde fois. Le signal de début de transmission facilite l'identification des signes dont les durées et rapports sont différents de ceux adoptés en télégraphie puisque déterminés en fonction des conditions de propagation du son dans l'eau. Le codage choisi est le code morse. Le dispositif monté sur les trois bateaux suisses Regina, Rhône et Cervin a donné satisfaction du point de vue du fonctionnement. Il comprenait des émetteurs électroacoustiques se présentant sous forme de transducteurs et des circuits de commande de ces transducteurs. Les transducteurs sont situés dans les double-fonds du navire et rayonnent sur tout l'horizon par une ouverture ménagée à cet effet dans la coque du navire. L'armoire de commande comprenant les circuits est située dans la salle des machines ou dans des locaux annexes. Cette disposition et le montage dans la coque du navire présente des désavantages et à rencontré une opposition chez les armateurs. Cette opposition est due à:

- l'immobilisation du navire en cale sèche lors du montage du dispositif d'identification ,

- modification à effectuer dans la structure du navire. En particulier, les armateurs n'ont pas apprécié le perçage d'un trou dans la coque destiné à mettre les transducteurs en contact avec l'eau,

- impossibilité de la maintenance une fois le système installé, à moins d'un nouveau passage en cale sèche et des coûts que cela entraîne,

- problèmes financiers causés par les travaux dans la coque et le passage en cale sèche qui occasionnent des frais que les armateurs ne veulent en aucun cas supporter vu la situation économique actuelle.

Le but de l'invention est de proposer un dispositif électroacoustique d'identification subaquatique qui soit indépendant du navire qu'il doit identifier et qui ne requiert pas le passage du navire en cale sèche pour être monté.

Le dispositif électroacoustique d'identification subaquatique selon l'invention doit pouvoir être relié non seulement à un navire, mais à tout autre objet immergé ou flottant, par exemple des chalands, des barges, des docks flottants, des dracones, des plates-formes de forage, etc., de manière à localiser et identifier ces objets se trouvant sur ou sous l'eau. D'autre part, le dispositif doit également pouvoir être utilisé comme balise acoustique de localisation de sinistre. Dans ce cas, il sera possible d'ajouter au signal d'identification un préfixe de détresse qui est à fixer avec l'OMI (Organisation Maritime Internationale) à Londres.

Le dispositif selon l'invention est caractérisé en ce qu'il est enfermé dans une traîne étanche reliée à l'objet immergé ou flottant par l'intermédiaire d'un câble électro-mécanique, la traîne présentant des moyens pour être immergée à une profondeur prédéterminée.

Selon un mode d'exécution préféré, la traîne est un cylindre de forme hydrodynamique muni d'ailerons horizontaux et verticaux et d'une quille faisant office de ballast.

Le dispositif peut comprendre quatre transducteurs alimentés par le circuit de commande et placés horizontalement, à angle droit l'un par rapport à l'autre, de manière à émettre le signal codé d'identification selon une émission simultanée sur tout l'horizon.

Les transducteurs peuvent être placés dans le corps cylindrique de la traîne avec les circuits de commande ou peuvent être placés dans la quille de la traîne.

La traîne peut comprendre un sondeur de profondeur agencé pour mesurer la profondeur de l'eau sous la traîne.

Le dispositif peut comprendre des moyens capteurs d'un signal sonar d'interrogation, agencés pour déclencher l'émission du signal codé d'identification dès réception du signal sonar d'interrogation.

- 5 -                               0123648

Les transducteurs d'émission peuvent être utilisés avec
un circuit approprié comme moyens capteurs du signal
sonar d'interrogation.            .

Le circuit de commande comprend un micro-
processeur avec ses périphériques contenant le signal
d'identification, les moyens de codage et les données
de fréquence d'émission, le micro-processeur étant
relié aux transducteurs par l'intermédiaire d'un amplificateur.

Le dessin représente, à titre d'exemples, un
mode d'exécution et une variante du dispositif d'identification subaquatique selon l'invention.

Dans le dessin:

La fig. 1 est représente l'arrière d'un navire avec un moyen de mise à l'eau et de halage à bord
d'une traîne contenant le dispositif d'identification
subaquatique d'un navire,

la fig. 2 est une vue schématique de dessus
d'un mode d'exécution d'une traîne présentant un corps
principal, des ailerons et une quille et contenant le
dispositif d'identification dans son corps principal,

la fig. 3 est une vue de côté de la traîne
de la fig. 2,

la fig. 4 est une vue de côté d'une variante
de la traîne des fig. 2 et 3, le dispositif d'identification étant contenu dans la quille de la traîne, et

la fig. 5 est un schéma-bloc du circuit électronique permettant l'émission du signal d'identification subaquatique à l'aide de transducteurs.

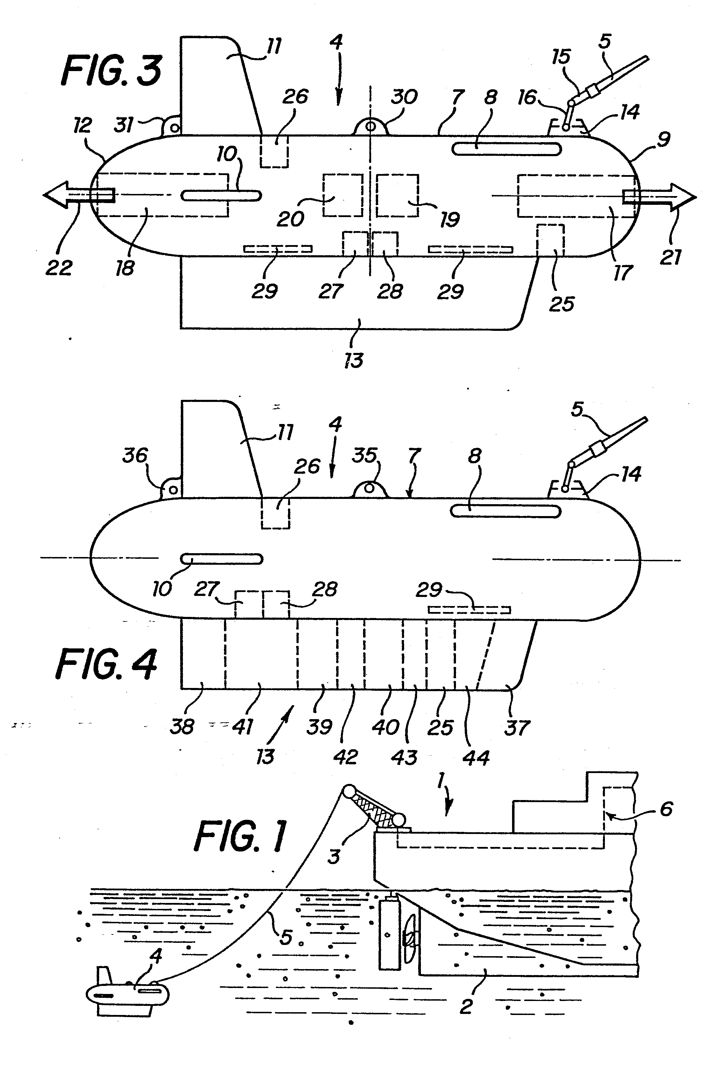

La fig. 1 représente la plage arrière 1 d'un navire 2 avec un dispositif de mise à l'eau et de halage à bord 3 d'une traîne 4 remorquée par l'intermédiaire d'un câble électro-mécanique 5. Le câble électro-mécanique 5 est enroulé sur un tambour 6 permettant de donner plus ou moins de longueur au câble 5. Le dispositif de mise à l'eau et de halage 3 se présente sous forme d'une grue pivotante placée à l'extrémité de la plage arrière 1 du bateau 2 qui permet de ramener la traîne 4 sur la plage arrière 1 lorsque l'on désire effectuer des contrôles ou lorsque l'on ne veut pas utiliser la traîne 4.

Dans le language maritime, une traîne est un objet que l'on file à l'arrière d'un navire à l'aide d'un filin représenté ici par le câble électro-mécanique 5 permettant d'amener le courant au dispositif d'identification subaquatique logé à l'intérieur de la traîne 4 comme expliqué plus loin en regard des fig. 2 à 5. Le moyen d'alimentation et de commande du dispositif électro-acoustique d'identification subaquatique placé à l'intérieur de la traîne 4 est placé sur la passerelle du navire, par exemple en 6 et présente des moyens de connexion non représentés permettant de le relier au câble électro-mécanique 5.

Comme représenté dans le mode d'exécution des fig. 2 et 3, la traîne 4 se présente sous la forme d'un corps principal cylindrique 7 présentant deux ailes latérales 8 placées à la partie avant 9 du corps cylindrique 7 et trois ailerons 10 et 11 placés à l'arrière
12 du corps cylindrique 7. Les ailerons 10 sont des
ailerons latéraux et l'aileron 11 est une dérive verticale. La traîne 4 présente finalement une quille
13 placée à la partie inférieure de la traîne 4 et
s'étendant sur une bonne partie de sa longueur. La
quille 13 est lestée de ballasts qui permettent de
stabiliser la traîne à l'immersion voulue et préréglée.
La profondeur de l'immersion sera préréglée selon une
échelle correspondant au tirant d'eau maximum du navire
et aux données bathythermiques. L'immersion préréglée
peut être contrôlée automatiquement par un manomètre.
Le câble électro-mécanique 5 (fig. 3) est relié à un
dispositif d'accrochage 14 fixé sur la traîne 4 par
l'intermédiaire de deux manilles perpendiculaires et
articulées 15 et 16. Il est évident que le dispositif
d'accrochage 14 qui comprend l'anneau de remorque est
placé sur une partie fortement renforcée et non représentée de la traîne. L'alimentation électrique en bout
de câble 5 passe par un presse étoupe non représenté
et un raccord souple du câble à l'intérieur de la
traîne 4. Le câble électro-mécanique 5 remplit ainsi
une fonction de remorque et une fonction d'alimentation
électrique de la traîne. Il relie le module de commande
6 placé sur la plage arrière 1 du navire 2 au dispositif électroacoustique d'identification subaquatique
logé à l'intérieur de la traîne et décrit plus loin.

Le dispositif électroacoustique d'identification subaquatique émet grâce à des transducteurs placés
dans la traîne 4 un signal acoustique constitué de
points et de traits selon l'alphabet morse, émis sur
des fréquences choisies en fonction du bruit caractéristique du navire ou de l'objet à identifier, généralement à des fréquences situées entre 3 et 12 kHz. Le
signal en morse peut être l'indicatif d'appel du navire
ou de l'objet à identifier, son numéro d'appel sélectif
ou un ensemble de lettres, de chiffres ou une combinaison des deux attribuée à l'objet à identifier. Le signal
peut également être constitué de sons modulés sans recourir à l'alphabet morse. Ainsi, il est tenu compte
du fait que certains navires ou objets flottants peuvent ne pas avoir d'indicatif d'appel ou s'ils en ont
un, ne pas vouloir l'utiliser pour l'identification  .
sous-marine. Une combinaison de l'indicatif d'appel en
morse précédé  ou suivi  d'un autre signal est également possible lorsqu'il est nécessaire d'avoir un signal d'identification spécial émis par l'identificateur fonctionnant comme répondeur sonar spécifique. Le
signal peut également être précédé d'un préfixe de
détresse selon les règles internationales pour indiquer
ou localiser une épave ou un sinistre quelconque à
l'aide d'une balise acoustique subaquatique. Le signal
ainsi que le préfixe de détresse est à déterminer avec
l'OMI (Organisation Maritime Internationale). Le signal
ou son codage morse peut être programmé dans un micro-
ordinateur et il sera également prévu de régler la répétition du signal et son émission dans le temps à la
cadence voulue depuis l'arrêt complet de l'émission
jusqu'à une émission continue. La formation d'un signal
acoustique au moyen d'un transducteur est une technique connue et a déja fait l'objet de diverses publications accessibles au public. Dans certaines situations,
il peut être demandé au  dispositif d'identification
subaquatique de ne fonctionner qu'une fois par 24 heures,
alors qu'en d'autres circonstances ce même identificateur doit pouvoir émettre, par exemple l'identification
d'un navire hôpital dans une zone de guerre navale sous-marine, continuellement pendant 24 heures ou plus, en ayant la possibilité à tout moment de modifier ou d'interrompre la cadence de l'émission du signal d'identification, afin de l'adapter aux conditions de l'environnement militaire, naval ou commercial. De même, en cas de goniométrie acoustique, de travaux de recherche, etc. ou en présence d'autres émissions subaquatiques, il doit être possible pour éviter des interférences de changer la nature et la fréquence d'émission du signal.

Le micro-ordinateur contiendra de préférence un programme permettant au dispositif électroacoustique d'identification de fonctionner également automatiquement pour l'émission du signal d'identification en réponse à un signal d'interrogation sonar. L'interrogation sonar est l'émission acoustique de détection qui atteint la carène d'un navire et son dispositif d'identification remorqué en immersion à très courte distance, c'est-à-dire de préférence à moins de 50 m. Pour réaliser cette fonction de réponse à un signal d'interrogation sonar, il est possible de mettre les transducteurs émettant le signal en écoute passive pendant les périodes où il n'y a pas d'émission du signal d'identification. Lorsqu'ils sont en écoute passive, les transducteurs pourront ainsi commander la mise en route du signal d'identification dès réception d'un signal sonar d'identification. Ainsi, lorsque les transducteurs ne fonctionnent pas automatiquement pour l'émission du signal d'identification, ils sont automatiquement reliés à la partie répondeur du système utilisant leur double fonction d'hydrophone et d'émetteur.

La traîne représentée dans les fig. 2 et 3 comprend à l'avant 9, à l'arrière 12, ainsi que sur ses côtés latéraux quatre transducteurs 17, 18, 19 et 20 émettant dans les quatre directions représentées par les flèches 21, 22, 23 et 24. Comme les transducteurs 17 à 20 émettent selon un angle d'ouverture d'au moins $120^{O}$, il est évident que le signal d'identification consiste en une émission simultanée sur tout l'horizon.

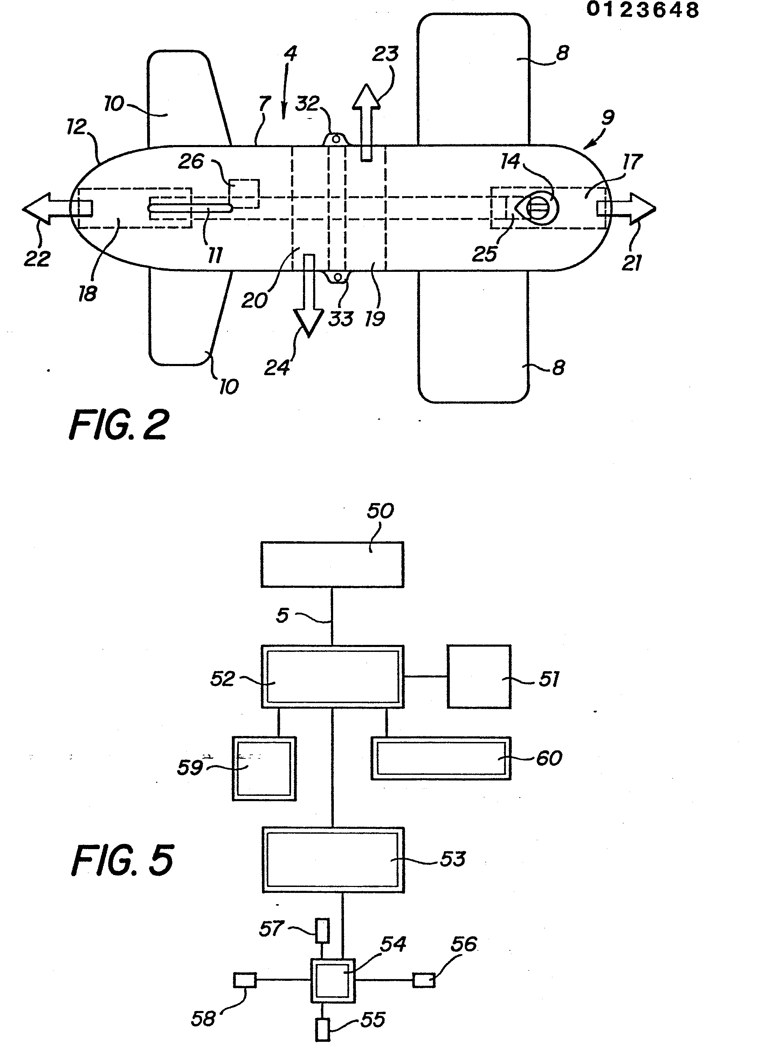

La traîne représentée dans les fig. 2 et 3 comprend en plus des transducteurs et des circuits d'émission un sondeur de profondeur vertical 25. Le sondeur 25 mesure la profondeur d'eau sous la traîne et l'indique sur un écran de visualisation du module de commande placé en 6 sur la passerelle près de la plage arrière 1 du navire 2 (fig. 1). Le sondeur 25 peut être agencé pour déclencher une alarme lumineuse et sonore à la profondeur minimale préréglée; il peut commuter sur la puissance d'émission de signal réduite si désiré. Il peut stopper l'émission si la profondeur est inférieure au minimum et faire redémarrer l'émission du signal d'identification à la profondeur requise. La traîne 4 comprend encore un manomètre de niveau 26 destiné à mesurer la pression extérieure et indiquer la profondeur d'immersion de la traîne 4 sur l'écran de visualisation placé sur le navire. Ce manomètre permet le contrôle en continu de la profondeur d'immersion de la traîne. En 27 est placée une jauge interne qui a pour but de vérifier l'étanchéité de la traîne 4. Il existe dans le commerce de telles jauges qui fonctionnent à ultra-sons. Elles visualisent une alarme sur le module de commande au cas où une présence d'eau est détectée dans la traîne. En 28 est prévu une sonde de température interne/externe qui mesure la température interne de la traîne et visualise les anomalies sur le module de commande. Cette sonde de température 28 mesure également la température externe de la mer au niveau de la traîne et l'affiche sur le module de commande placé en 6 sur la passerelle près de la plage arrière 1 du navire. En 29 (fig. 3) sont représentés les circuits électroniques du dispositif d'identification subaquatique qui seront décrits en regard de la fig. 5. La traîne présente encore sur sa surface extérieure des anneaux de manutention 30, 31, 32 et 33 (fig. 2 et 3).

La traîne qui vient d'être décrite dans le mode d'exécution des fig. 2 et 3 peut recevoir des dispositifs de mesure et de contrôle supplémentaires destinés à effectuer des fonctions supplémentaires pour lesquelles une adaptation de l'électronique utilisée est possible, afin de traiter les données fournies par des senseurs et des capteurs adéquats pour des tâches hydrographiques, utiles pour l'océanographie, par exemple la bathythermie, les mesures de densité et de salinité des eaux, l'échantillonage pour la biologie marine, la pollution des mers ou le contrôle de la pollution par les navires.

D'autres activités nécessitant des transducteurs peuvent également être prévues, par exemple la détection de banc de poissons pour la pêche et l'étude de la faune sous-marine, la détection de balise de goniométrie acoustique et de navires, la détection d'obstacles sous-marins, d'épaves et la détection de sols ou structures sous-marines pour des buts géologiques.

La traîne qui vient d'être décrite est réalisée en acier ou en un métal léger. Elle peut également être réalisée dans un plastique renforcé, par exemple en fibres de verre, armé ou non. Elle aura des dimensions allant de 80 à 90 cm de longueur jusqu'à plusieurs mètres.

Dans la variante de la fig. 4, la traîne 4 comprend le corps cylindrique 7 avec ses deux ailes avants 8, ses deux ailerons latéraux 10 et son aileron vertical 11. Elle est remorquée de la même manière que le mode d'exécution des fig. 2 et 3 par l'intermédiaire d'un câble électro-mécanique 5 et d'un support de traction 14. Elle comprend également des anneaux de manutention 35, 36 et une quille 13 présentant des cloisonnements internes dans lesquels seront placés les transducteurs et le ballast. Les transducteurs émettant vers l'avant, respectivement vers l'arrière, seront placés dans les cloisonnements 37, 38 et les deux transducteurs latéraux dans les cloisonnements 39, 40. Les cloisonnements 41, 42, 43 et 44 contiendront les ballasts permettant de stabiliser la traîne 4 à l'immersion voulue et prédéterminée. Comme dans le mode d'exécution des fig. 2 et 3, la traîne 4 de la fig. 4 comprendra également le sondeur 25 placé dans la quille 13 ainsi que le manomètre 26, la jauge interne 27 et la sonde de température 28, ces trois derniers éléments étant placés dans le cylindre 7 de la traîne 4. Les circuits 29 d'alimentation des transducteurs sont également placés dans le corps cylindrique 7 à proximité de la quille 13 contenant les quatre compartiments recevant les transducteurs, qui sont également placés de façon à couvrir tout l'horizon de leur émission. Chaque transducteur est fixé dans un container étanche 37, 38, 39 et 40 faisant corps avec la quille.

Le schéma-bloc de la fig. 5 représente l'électronique utilisée pour l'alimentation des transducteurs du dispositif électroacoustique d'identification subaquatique logés dans la traîne 4 représentée dans les fig. 2, 3 et 4. Le schéma-bloc montre le micro-processeur avec ses périphériques, les amplificateurs et filtres, selon la technologie actuelle. La puissance choisie de l'émetteur constitué par les quatre transducteurs sera de 2000 watts. Cette puissance est suffisante pour une portée effective du signal de 25 miles marins sur tout l'horizon. Au cas où le tonnage d'un navire imposerait de limiter la puissance nominale de l'identificateur, celle-ci peut être réduite à 1000 watts. Elle peut encore être réduite à 500 watts si le système doit fonctionner à des profondeurs proches de 20 mètres.

La conception des circuits d'alimentation des transducteurs doit tenir compte des possibilités d'adaptation pouvant être requises, notamment par le fait que chaque navire ou objet à identifier possède une signature acoustique qui lui est propre. D'autres variables pourront également influencer les caractéristiques de l'émission et la puissance du signal d'identification, par exemple pour un navire navigant en mer Baltique, la bathymétrie et les variations bathythermiques de cette mer selon les saisons peuvent nécessiter une adaptation du signal aux conditions particulières de cette mer fermée. En recourant à la technologie actuelle, on obtient la solution recherchée en utilisant un micro-ordinateur dont l'unité centrale est composée d'un micro-processeur de mémoire vive (RAM), de mémoire morte (ROM) et semi-morte (EPROM) avec leurs circuits intégrés d'accès aux périphériques, à la mémoire et à la base de temps selon le schéma simplifié de la fig. 5. Comme mentionné plus haut, la puissance nominale de 2 kW pourra être réduite à 1 kW, voire à 500 W si nécessaire. L'alimentation en 220 V sera fournie par le navire.

Selon le schéma-bloc de la fig. 5, le module de commande 50 permettant l'alimentation de la traîne et la visualisation de certaines données sur la passerelle d'un navire est reliée à un micro-processeur 51 et à ses périphériques 52 par l'intermédiaire du câble électro-mécanique 5. Les périphériques 52 avec leurs interfaces sont reliés à un circuit d'alimentation/amplification 53 comprenant des filtres convertisseurs. Le circuit d'alimentation/amplification aboutit à une boîte de connexion 54 reliée aux quatre transducteurs 55, 56, 57 et 58 placés à 90$^O$ les uns par rapport aux autres, de manière à émettre sur tout l'horizon. Les périphériques 52 sont reliés d'une part à un décodeur 57 et à des circuits capteurs 58.

L'homme du métier comprend facilement le fonctionnement du circuit du schéma-bloc de la fig. 5. En effet, les circuits de la fig. 5 sont enclenchés à l'aide du module de commande 50 se trouvant sur la passerelle du navire. Les données nécessitant un certain choix par l'utilisateur, par exemple la puissance d'émission ou la durée d'interruption entre deux émissions sont choisies et introduites dans le module de commande 1. Le micro-processeur 51 avec ses périphériques contient le signal d'identification avec son codage, commande les circuits d'amplification 53 qui alimentent les transducteurs 56. Entre deux émissions,
les circuits décodeurs 57 et capteurs 58 recueillent
les informations transmises par les transducteurs 56
lorsque ceux-ci sont à l'écoute d'une interrogation
sonar. Si cette interrogation sonar se produit, les
circuits capteurs analysent le signal à l'aide des circuits décodeurs et si cette analyse est positive, commandent l'émission du signal d'identification.

Il est évident pour l'homme du métier que les
circuits qui viennent décrits à l'aide de la fig. 5 peuvent être simplifiés et que par exemple les circuits capteurs 58 peuvent être supprimés dans le cas où l'on ne
désire pas utiliser l'appareil pour répondre à un signal
d'interrogation sonar. De même, le circuit peut être
complété pour adjoindre d'autres fonctions, par exemple
pour effectuer des contrôles hydrographiques ou des
contrôles de pollution comme mentionné plus haut.

Le dispositif électro-acoustique d'identification subaquatique d'un objet immergé ou flottant,
notamment d'un navire qui vient d'être décrit et qui
est logé à l'intérieur d'une traîne remorquée par un
navire présente de nombreux avantages:

1. le montage du dispositif dans la traîne en fait une
   unité complètement indépendante du navire ou de
   l'objet immergé ou flottant qu'il doit identifier.
   Il n'est donc pas nécessaire de faire passer le
   navire en cale sèche pour le montage du dispositif
   qui peut être ramené à bord du navire pour effectuer la maintenance et les contrôles nécessaires
   et remis à l'eau sans que le navire soit immobilisé.

2. La disposition des transducteurs horizontaux permet
   de simplifier l'électronique et permet une puissance d'émission plus forte que celle qui peut être obtenue
à l'aide du dispositif décrit dans le brevet suisse
No. ..........(demande de brevet 7424/79-0).

3. Une traîne de rechange peut être prévue en cas
   d'avarie et replacée immédiatement à l'eau, de
   manière à ce que les signaux d'identification du
   navire ne soient pas interrompus trop longtemps dans
   le cas où celui-ci serait dans une zone de combats.

4. La traîne est plus facile à réaliser et d'un coût plus
   bas que le montage d'un coffre étanche et l'installation dans les fonds d'un navire.

5. La révision, le transport et la livraison des
   traînes contenant les dispositifs électroacoustiques
   d'identification est plus facile et moins honéreux
   qu'une installation permanente dans les fonds d'un
   navire.

REVENDICATIONS

1. Dispositif électroacoustique d'identification subaquatique d'un objet immergé ou flottant, notamment d'un navire, comprenant au moins un transducteur électroacoustique commandé par un circuit agencé pour émettre un signal codé d'identification à une fréquence située entre 3 et 12 kHz selon un programme établi, caractérisé en ce qu'il est enfermé dans une traîne étanche reliée à l'objet immergé ou flottant par l'intermédiaire d'un câble électro-mécanique, la traîne présentant des moyens pour être immergée à une profondeur prédéterminée.

2. Dispositif selon la revendication 1, caractérisé en ce que la traîne est un cylindre de forme hydrodynamique muni d'ailerons de guidage et d'une quille faisant office de ballast.

3. Dispositif selon la revendication 2, caractérisé en ce que quatre transducteurs sont alimentés par un circuit de commande et placés horizontalement, à angle droit l'un par rapport à l'autre, de manière à émettre le signal codé d'identification selon une émission simultanée sur tout l'horizon.

4. Dispositif selon la revendication 3, caractérisé en ce que les transducteurs sont placés dans le corps cylindrique de la traîne avec les circuits de commande.

5. Dispositif selon la revendication 3, caractérisé en ce que les transducteurs sont placés dans la quille de la traîne.

6. Dispositif selon la revendication 1, caractérisé en ce que la traîne comprend un sondeur de profondeur agencé pour mesurer la profondeur de l'eau sous la traîne.

7. Dispositif selon la revendication 6, caractérisé en ce que le sondeur est agencé pour enclencher, interrompre ou réduire la puissance d'émission du signal d'identification.

8. Dispositif selon la revendication 1, caractérisé en ce que la traîne comprend des senseurs ou capteurs complémentaires destinés à effectuer des relevés hydrographiques, biologiques, des contrôles de pollution ou détection de balises ou d'obstacles sous-marins.

9. Dispositif selon la revendication 1, caractérisé en ce qu'il comprend des moyens capteurs d'un signal sonar d'interrogation agencés pour déclencher l'émission du signal codé d'identification dès réception du signal sonar d'interrogation.

10. Dispositif selon la revendication 9, caractérisé en ce que les moyens capteurs sont le transducteur d'émission du signal codé utilisé comme élément d'écoute passive entre deux émissions d'identification.

11. Dispositif selon la revendication 1, caractérisé en ce que le circuit de commande comprend un micro-processeur avec ses périphériques contenant le signal d'identification, les moyens de codage et les données de fréquence d'émission, le micro-processeur étant reliés au transducteur par l'intermédiaire d'un

- 3 -                                    0123648

amplificateur.

12. Dispositif selon la revendication 11, caractérisé en ce que le micro-processeur est relié à un module de commande placé sur la passerelle de navire ou sur l'objet à identifier par l'intermédiaire du câble électro-mécanique.

13. Dispositif selon la revendication 11, caractérisé en ce que le micro-processeur et ses périphériques sont en liaison avec un décodeur et un circuit capteur agencés pour recueillir une information des transducteurs lorsque ceux-ci sont en écoute sonar et commander l'émission d'identification dès réception et analyse du signal sonar d'interrogation.

14. Dispostif selon la revendication 11, caractérisé en ce que le circuit de commande est alimenté pour permettre une émission d'identification d'une puissance de 2000 watts, des moyens de réduction de la puissance d'émission étant prévus.

FIG. 3

FIG. 4

FIG. 1

0123648

FIG. 2

FIG. 5

Office européen
des brevets

**RAPPORT DE RECHERCHE EUROPEENNE**

EP   84 81 0129

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | EP-A-0 024 262  (BLANCHUT & BERTRAND) <br> * Page 1, lignes 1-11 * | 1 | G 01 S   15/74 <br> B 63 G    8/42 |
| Y | EP-A-0 071 117  (EDO WESTERN CORP.) <br> * Figure 1; abrégé * | 1 | |
| A | DE-U-1 841 301  (BRD) <br><br> * Page 1, ligne 6 - page 2, ligne 20 * | | |
| A | US-A-2 418 846  (L.A. MEACHAM) <br><br> * Figure 1 * | | |

DOMAINES TECHNIQUES
RECHERCHES (Int. Cl. ³)

G 01 S    1/72
G 01 S   15/74
G 01 S   15/88
B 63 G    8/42
H 04 B   11/00

Le présent rapport de recherche a été établi pour toutes les revendications

| Lieu de la recherche | Date d'achèvement de la recherche | Examinateur |
|---|---|---|
| BERLIN | 19-06-1984 | BREUSING J |